# EUROPEAN PATENT APPLICATION

(11) **EP 4 760 866 A1**
(43) Date of publication of application: **17.06.2026**
(21) Application number: 25738915.5
(22) Date of filing: 07.01.2025
(51) Int. Cl.: H01M 10/48, H01M 10/42, H01M 50/569, H01M 50/291, H01M 50/271, H01Q 1/22, H01Q 1/52

(54) **BATTERY PACK**

(30) Priority: 11.01.2024 KR 20240004518; 31.10.2024 KR 20240151876
(71) Applicant: LG Energy Solution, Ltd., Seoul 07335 (KR)
(72) Inventor: HUR, Nam Hoon, Daejeon 34122 (KR); SHIN, Ju Hwan, Daejeon 34122 (KR); HA, Jeong Wan, Daejeon 34122 (KR); LEE, Hyoung Suk, Daejeon 34122 (KR)
(74) Representative: Plasseraud IP
(86) International application number: PCT/KR2025/000321
(87) International publication number: WO 2025/150841

(57) **Abstract**

Embodiments provide a battery pack. The battery pack includes: a pack housing including a base plate and side walls; a plurality of battery cell assemblies provided on the base plate and each including a plurality of battery cells and an integrated circuit assembly that is coupled to the plurality of battery cells and includes a first antenna; a battery management system (BMS) including a second antenna; and a lid coupled to the side walls, in which the lid includes a waveguide overlapping the first antenna of each of the plurality of battery cell assemblies and the second antenna and further includes a base part and an ascending part farther spaced apart from the base plate than the base part, and the waveguide is on the ascending part.

## Description

### [Technical Field]

The present disclosure relates to a battery pack. The present application claims the benefit of priority based on Korean Patent Application No. 10-2024-0004518, filed on January 11, 2024 and Korean Patent Application No. 10-2024-0151876, filed on October 31, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present disclosure is directed to providing a battery pack with improved energy density.

### [Technical Solution]

Embodiments provide a battery pack. The battery pack includes: a pack housing including a base plate and side walls; a plurality of battery cell assemblies provided on the base plate and each including a plurality of battery cells and an integrated circuit assembly that is coupled to the plurality of battery cells and includes a first antenna; a battery management system (BMS) including a second antenna; and a lid coupled to the side walls, in which the lid includes a waveguide overlapping the first antenna of each of the plurality of battery cell assemblies and the second antenna and further includes a base part and an ascending part farther spaced apart from the base plate than the base part, and the waveguide is on the ascending part.

The plurality of battery cells of each of the plurality of battery cell assemblies may be arranged in a first direction parallel to a mounting surface of the base plate, and the waveguide may extend in the first direction.

The plurality of battery cells of each of the plurality of battery cell assemblies may be arranged in a first direction parallel to a mounting surface of the base plate, and the waveguide may include a first part extending in the first direction and a second part extending in a second direction perpendicular to the first direction.

The first part of the waveguide may overlap the first antenna of each of the plurality of battery cell assemblies, and the second part of the waveguide may overlap the second antenna.

The battery pack may further include cross-beams between the plurality of battery cell assemblies, and a reinforcing part coupled to the cross-beams, the reinforcing part may be spaced apart from the base plate with the cross-beams interposed between the reinforcing part and the base plate, and the waveguide may overlap the reinforcing part.

The battery pack may further include first reinforcing brackets coupled to the lid and spaced apart from each other with the waveguide interposed therebetween.

The battery pack may further include a second reinforcing bracket between the first reinforcing brackets.

The plurality of battery cells of each of the plurality of battery cell assemblies may be arranged in a first direction parallel to a mounting surface of the base plate, and each of the first reinforcing brackets may extend in the first direction.

The second reinforcing bracket may extend in a second direction perpendicular to the first direction.

The reinforcing bracket may overlap the waveguide in the first direction.

A height of the waveguide may be in a range of 1 mm to 10 mm.

A width of the waveguide may be in a range of 100 mm to 200 mm.

The lid may further include a shield partially surrounding the waveguide and further include a descending part closer to the base plate than the base part, and the shield may be on the descending part.

A planar shape of the shield may include a C-shape.

Embodiments provide a battery pack. The battery pack includes: a pack housing including a base plate and side walls; first to fourth battery cell assemblies provided on the base plate and each including a plurality of battery cells and an integrated circuit assembly that is coupled to the plurality of battery cells and includes a first antenna; a battery management system (BMS) including a second antenna; and a lid coupled to the side walls, in which the lid includes a waveguide including a first part overlapping the first antenna of each of the first and second battery cell assemblies, a second part overlapping the first antenna of each of the third and fourth battery cell assemblies, and a third part overlapping the second antenna, the lid further includes a base part and an ascending part farther spaced apart from the base plate than the base part, and the waveguide is on the ascending part.

A planar shape of the waveguide may include a C-shape.

Each of the first and second parts may extend in a first direction parallel to a mounting surface of the base plate, and the third part may extend in a second direction parallel to the mounting surface and perpendicular to the first direction.

The third part may be interposed between the first and second parts.

### [Advantageous Effects]

A battery pack according to embodiments of the present disclosure is capable of monitoring voltages and temperatures of battery cell assemblies through wireless communication. Accordingly, a wiring for signal transmission between the battery cell assemblies and a battery management system (BMS) can be omitted to improve the energy density of the battery pack.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a plan view of a battery pack according to embodiments.
FIG. 2 is a plan view of a battery pack according to embodiments.
FIG. 3 is a cross-sectional view taken along line 1I-1I' of FIG. 1.
FIG. 4 is a plan view of a battery pack according to embodiments.
FIG. 5 is a plan view of a battery pack according to embodiments.
FIG. 6 is a plan view of a battery pack according to embodiments.
FIG. 7 is a plan view of a battery pack according to embodiments.
FIG. 8 is a cross-sectional view taken along line 6I-6I' of FIG. 6.
FIG. 9 is a plan view of a battery pack according to embodiments.
FIG. 10 is a plan view of a battery pack according to embodiments.
FIG. 11 is a cross-sectional view taken along line 9I-9I' of FIG. 9.
FIG. 12 is a plan view of a battery pack (104) according to embodiments.
FIG. 13 is a cross-sectional view taken along line 12I-12I' of FIG. 12.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

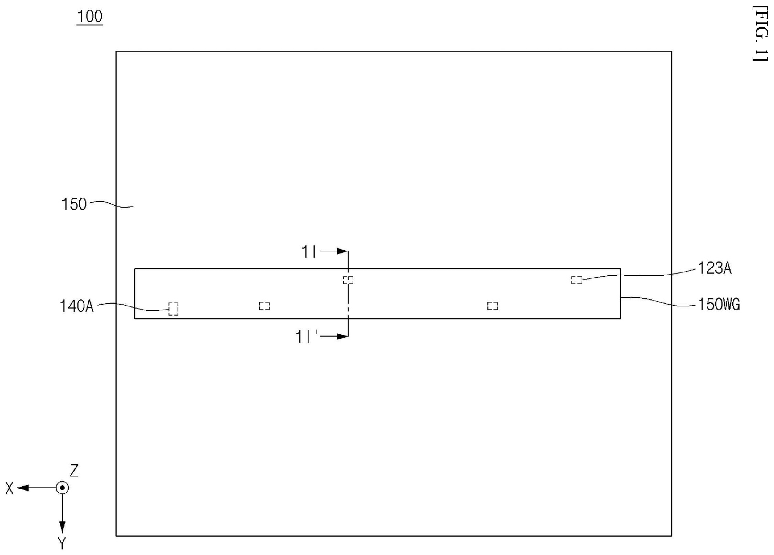

FIG. 1 is a plan view of a battery pack 100 according to embodiments.

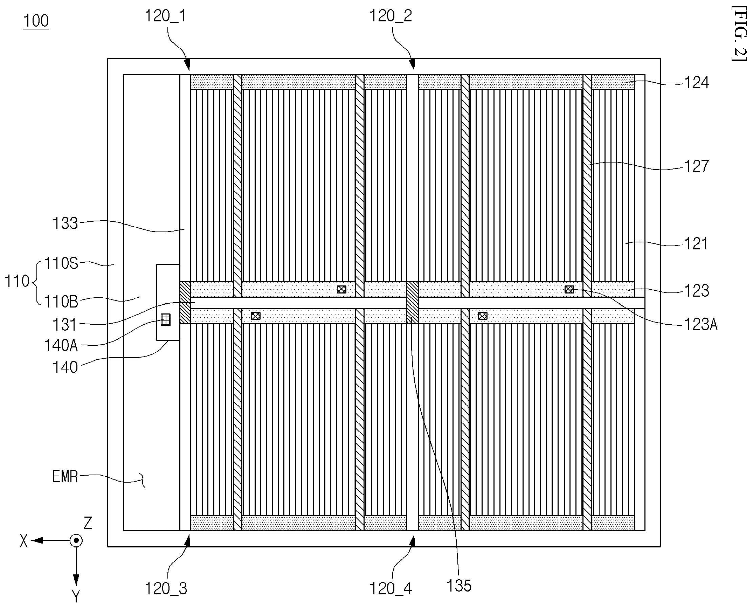

FIG. 2 is a plan view of the battery pack 100 according to embodiments. In FIG. 2, a lid 150 is omitted for more complete understanding of a positional relationship between elements of the battery pack 100.

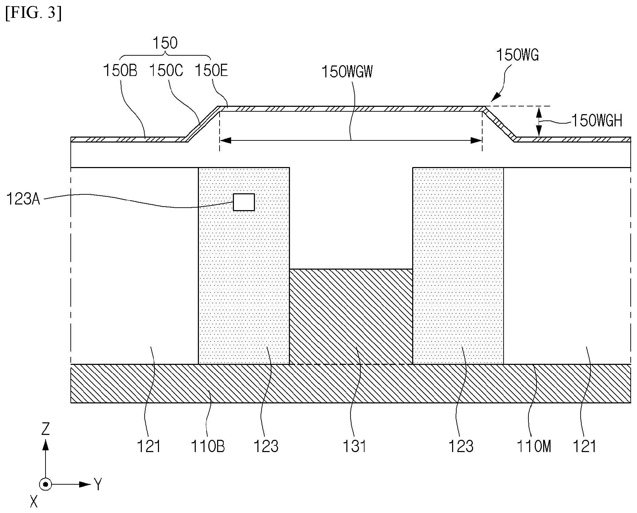

FIG. 3 is a cross-sectional view taken along line 1I-1I' of FIG. 1.

Referring to FIGS. 1 to 3, the battery pack 100 may include a pack housing 110, a plurality of battery cell assemblies 120_1, 120_2, 120_3 and 120_4, a center beam 131, cross-beams 133, reinforcing parts 135, a battery management system (BMS) 140, and the lid 150. The battery pack 100 is a final form of a battery system to be mounted in a mobility or the like.

The pack housing 110 may include a base plate 110B and side walls 110S. Here, two directions substantially parallel to a mounting surface 110M of the base plate 110B are defined as an X-axis direction and a Y-axis direction, and a direction substantially perpendicular to the mounting surface 110M of the base plate 110B is defined as a Z-axis direction. The X-axis direction, the Y-axis direction, and the Z-axis direction may be substantially perpendicular to one another.

The base plate 110B may have a flat plate shape. The side walls 110S may be substantially perpendicular to the base plate 110B. The side walls 110S may be edges of the base plate 110B.

Each of the base plate 110B and the side walls 110S may be provided by an extrusion process. The base plate 110B may include a plurality of plates coupled to each other by friction stir welding.

A plurality of battery cell assemblies 120_1, 120_2, 120_3, and 120_4 may be on the mounting surface 110M of the base plate 110B of the pack housing 110. In the present example, the battery cell assemblies 120_1 and 120_2 may be arranged in the X-axis direction, the battery cell assemblies 120_3 and 120_4 may be arranged in the X-axis direction, the battery cell assemblies 120_1 and 120_3 may be arranged in the Y-axis direction, and the battery cell assemblies 120_2 and 120_4 may be arranged in the Y-axis direction. Accordingly, the plurality of battery cell assemblies 120_1, 120_2, 120_3, and 120_4 form a matrix of two rows and two columns but are only an example and should not be understood as limiting the technical idea of the present disclosure in any sense.

The base plate 110B may support the plurality of battery assemblies 120_1, 120_2, 120_3, and 120_4. The side walls 110S may horizontally surround the plurality of battery cell assemblies 120_1, 120_2, 120_3, and 120_4.

Hereinafter, the technical idea of the present disclosure will be described with reference to an embodiment in which the battery pack 100 is of a moduleless type and each of the plurality of battery cell assemblies 120_1, 120_2, 120_3, and 120_4 does not include a module frame. However, the embodiment is a non-limiting example and should not be understood as limiting the technical idea of the present disclosure in any sense. Based on the above description, those of ordinary skill in the art will be able to easily derive a plurality of battery cell assemblies each including a module frame and a module type battery pack including the plurality of battery cell assemblies.

Each of the plurality of battery cell assemblies 120_1, 120_2, 120_3, and 120_4 may include a plurality of battery cells 121, a first integrated circuit assembly 123, a second integrated circuit assembly 124, and flexible flat cable (FFC) assemblies 127.

Each of the plurality of battery cells 121 may include an electrode assembly, positive electrode leads connected to positive electrode tabs of the electrode assembly, negative electrode leads connected to negative electrode tabs of the electrode assembly, an electrolyte, and a case. Each of the plurality of battery cells 121 may be a cylindrical battery cell, a prismatic battery cell, or a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween.

According to embodiments, the plurality of battery cells 121 may form a plurality of banks. Each of the plurality of banks may include one or more battery cells 121 connected in parallel. The plurality of banks may be connected to each other in series.

The negative electrode leads of one or more battery cells 121 of each of the plurality of banks may be short-circuited with the positive electrode leads of one or more battery cells 121 of a subsequent bank. The negative electrode leads of the one or more battery cells 121 of each of the plurality of banks may be welded to the positive electrode leads of the one or more battery cells 121 of the subsequent bank.

The positive electrode leads of the one or more battery cells 121 of each of the plurality of banks may be short-circuited with the negative electrode leads of one or more battery cells 121 of a preceding bank. The positive electrode leads of the one or more battery cells 121 of each of the plurality of banks may be welded to the negative electrode leads of the one or more battery cells 121 of the preceding bank.

The number of battery cells 121 included in each of the plurality of banks and the number of banks connected in series to each other may be determined according to a voltage and a current to be output through each of the plurality of battery cell assemblies 120_1, 120_2, 120_3, and 120_4.

According to embodiments, a cell stack may further include a plurality of separators. The plurality of separators may absorb swelling of the plurality of battery cells 121. According to embodiments, the plurality of separators may be thermal barriers. According to embodiments, each of the plurality of separators may have high melting temperature and low thermal conductivity. According to embodiments, each of the plurality of separators may include a flame retardant material such as ceramic and a coated glass material. According to embodiments, the plurality of separators may be configured to discharge a fire retarding material and a fire extinguishing agent when a thermal runaway event occurs.

The first integrated circuit assembly 123 and the second integrated circuit assembly 124 may be spaced apart from each other in the Y-axis direction with the plurality of battery cells 121 interposed therebetween. The first integrated circuit assembly 123 and the second integrated circuit assembly 124 may be electrically connected to each other by the FFC assemblies 127. Accordingly, sensed values (e.g., a voltage, current, and/or temperature) of the second integrated circuit assembly 124 may be transmitted to the first integrated circuit assembly 123 through the FFC assemblies 127.

According to embodiments, the first integrated circuit assembly 123 of each of the plurality of battery cell assemblies 120_1, 120_2, 120_3, and 120_4 may be on a central part (e.g., a central part in the Y-axis direction) of the pack housing 110. The first integrated circuit assembly 123 of each of the plurality of battery assemblies 120_1, 120_2, 120_3, and 120_4 may face the center beam 131.

According to embodiments, the second integrated circuit assembly 124 of each of the plurality of battery cell assemblies 120_1, 120_2, 120_3, and 120_4 may be on an edge part (e.g., an edge part in the Y-axis direction) of the pack housing 110. The second integrated circuit assembly 124 of each of the plurality of battery assemblies 120_1, 120_2, 120_3, and 120_4 may face the side wall 110S.

According to embodiments, a distance between the center beam 131 and the first integrated circuit assembly 123 of each of the plurality of battery cell assemblies 120_1, 120_2, 120_3, and 120_4 may be less than a distance between the center beam 131 and the second integrated circuit assembly 124 of each of the plurality of battery cell assemblies 120_1, 120_2, 120_3, and 120_4.

The first integrated circuit assembly 123 may include an antenna 123A. The first integrated circuit assembly 123 may further include an insulating frame, an integrated circuit, bus bars, sensing plates, sensing bars, temperature sensors, wires, and an insulating cover.

The insulating frame may include an insulating material such as plastic. The insulating frame may cover front sides of the plurality of battery cells 121. The insulating frame may support the integrated circuit, the bus bars, the sensing plates, the sensing bars, the temperature sensors, and the wires.

The bus bars may be short-circuited with positive electrode leads of one or more battery cells 121 of a first bank and negative electrode leads of one or more battery cells 121 of a last bank. The bus bars may be welded to the positive electrode leads of the one or more battery cells 121 of the first bank and the negative electrode leads of the one or more battery cells 121 of the last bank. Resulting voltages of the plurality of battery cells 121 of each of the plurality of battery cell assemblies 120_1, 120_2, 120_3, and 120_4 may be output through the bus bars. The bus bars may be fixed to the insulating frame.

The integrated circuit may be mounted on the insulating frame. The positive electrode leads and the negative electrode leads that are welded to each other may form nodes inside the battery cell assembly 120. The integrated circuit may be configured to measure voltages of the nodes.

The sensing bars may include a conductive material. The sensing bars may have a rod shape. The sensing bars may be short-circuited with the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited with corresponding ones of the positive electrode leads and the negative electrode leads of the plurality of battery cells 121.

Each of the sensing plates may be connected to the integrated circuit. Voltages of a plurality of nodes of each of the plurality of battery cells 120_1, 120_2, 120_3, and 120_4 may be measured through the sensing plates.

The temperature sensors may be configured to measure temperatures of a plurality of points on the battery cell assembly 120. The temperature sensors may be arranged in the X-axis direction, the Y-axis direction, and the Z-axis direction and thus a temperature distribution in the battery cell assembly 120 may be measured.

The antenna 123A may be configured to communicate with the BMS 140. As a non-limiting example, the antenna 123A may use a wireless LAN frequency, e.g., a 2.4 GHz band. A bandwidth of the 2.4 GHz band is about 80 MHz and may include fourteen overlapping channels. About three among the fourteen overlapping channels may be used simultaneously without signal interference.

The antenna 123A may be mounted on the integrated circuit of the first integrated circuit assembly. The antenna 123A may be configured to transmit a signal indicating measured values of voltages and temperatures of the battery cell assembly 120.

The insulating cover may include an insulating material such as plastic. The insulating cover may be interference fitted into the insulating frame. The insulating cover may cover the integrated circuit, the bus bars, the sensing plates, the sensing bars, and the temperature sensors and thus electrical elements of the first integrated circuit assembly 123 may be protected.

The second integrated circuit assembly 124 may include an insulating frame, an integrated circuit, sensing plates, temperature sensors, wires, and an insulating cover. The second integrated circuit assembly 124 is substantially the same as the first integrated circuit assembly 123, except that the second integrated circuit assembly 124 does not include bus bars and sensing bars.

The center beam 131 may be surrounded by the side walls 110S. Accordingly, the center beam 131 may divide a space defined by the pack housing 110. The center beam 131 may be included in one of the plurality of plates of the base plate 110B, formed by the extrusion process, together with one of the plurality of plates of the base plate 110B, or welded to one of the plurality of plates of the base plate 110B.

The center beam 131 may extend along the X-axis direction. The center beam 131 may isolate the battery cell assemblies 120_1 and 120_2 and the battery cell assemblies 120_3 and 120_4 in the Y-axis direction. The center beam 131 may be interposed between the battery cell assemblies 120_1 and 120_2 and the battery cell assemblies 120_3 and 120_4.

The cross-beams 133 may extend along the Y-axis direction. The cross-beams 133 may isolate the plurality of battery cell assemblies 120_1, 120_2, 120_3, and 120_4 in the X-axis direction. In the X-axis direction, the cross-beams 133 may be interposed between the battery cell assemblies 120_1, 120_2, 120_3, and 120_4 or between the battery cell assemblies 120_1, 120_2, 120_3, and 120_4 and the side walls 110S. The cross-beams 133 may be interposed between the side walls 110S and the center beam 131 in the Y-axis direction.

Those of ordinary skill in the art will be able to easily derive a structure in which the cross-beams 133 are integrated into the battery cell assemblies 120_1, 120_2, 120_3, and 120_4, based on the description herein.

The reinforcing part 135 may be coupled to each of the cross-beams 133 spaced apart from each other in the Y-axis direction. Impact resistance and vibration resistance of the cross-beams 133 may be improved by the reinforcing part 135.

The BMS 140 may be disposed in an electronic component mounting region EMR of the pack housing 110. The BMS 140 may be disposed between the side walls 110S on which exhaust devices are installed and the plurality of battery cell assemblies 120_1, 120_2, 120_3, and 120_4.

The BMS 140 may be configured to monitor, balance, and control the battery pack 100. The monitoring of the battery pack 100 may include measuring voltages and currents of certain nodes inside the plurality of battery cell assemblies 120_1, 120_2, 120_3, and 120_4, and measuring temperatures of set positions inside the battery pack 100. The BMS 140 may include an antenna 140A to receive signals that are transmitted from the antenna 123A of the first integrated circuit assembly 123 of each of the plurality of battery cell assemblies 120_1, 120_2, 120_3, and 120_4 and that indicate voltages and temperatures inside the plurality of battery cell assemblies 120_1, 120_2, 120_3, and 120_4.

The balancing of the battery pack 100 is an operation of reducing a deviation among the plurality of battery cell assemblies 120_1, 120_2, 120_3, and 120_4. The controlling of the battery pack 100 includes preventing overcharging, over-discharging, and overcurrent. Through monitoring, balancing, and controlling, the battery pack 100 may be operated under optimal conditions to prevent a decrease in the lifespan of each of the plurality of battery cell assemblies 120_1, 120_2, 120_3, and 120_4.

The lid 150 may be coupled to the side walls 110S. The lid 150 may cover elements, such as the battery cell assemblies 120_1, 120_2, 120_3, and 120_4 and electronic components, inside the battery pack 100. The lid 150 may be fixed to the pack housing 110 by a mechanical coupling means such as a bolt.

The lid 150 may include a waveguide 150WG. The waveguide 150WG may extend in the X-axis direction. The waveguide 150WG may overlap and the BMS 140 and the first integrated circuit assembly 123 of each of the plurality of battery cell assemblies 120_1, 120_2, 120_3, and 120_4 in the Z-axis direction. The waveguide 150WG may overlap the antenna 123A of the first integrated circuit assembly 123 of each of the plurality of battery cell assemblies 120_1, 120_2, 120_3, and 120_4 and the antenna 140A of the BMS 140 in the Z-axis direction. The waveguide 150WG may provide a channel for wireless communication between the antenna 123A of the first integrated circuit assembly 123 of each of the plurality of battery cell assemblies 120_1, 120_2, 120_3, and 120_4 and the antenna 140A of the BMS 140.

The lid 150 may include a base part 150B, an ascending part 150E, and a connection part 150C. A distance between the ascending part 150E and the base plate 110B may be different from a distance between the base part 150B and the base plate 110B. The distance between the ascending part 150E and the base plate 110B may be greater than the distance between the base part 150B and the base plate 110B. The connection part 150C may connect the ascending part 150E and the base part 150B.

As a non-limiting example, the lid 150 may be provided by a casting process. Accordingly, the base part 150B, the ascending part 150E, and the connection part 150C of the lid 150 may be consecutive elements of the lid 150 rather than elements coupled by welding, bolting, or the like.

The connection part 150C may be inclined in the Z-axis direction but embodiments are not limited thereto. The connection part 150C may be parallel to the Z-axis direction. The base part 150B and the ascending part 150E may be substantially perpendicular to the Z-axis direction.

A height 150WGH of the waveguide 150WG in the Z-axis direction may be defined as a distance between the base part 150B and the ascending part 150E in the Z-axis direction. The height 150WGH of the waveguide 150WG may be in a range of about 1 mm to about 10 mm. The height 150WGH of the waveguide 150WG may be about 2 mm or more. The height 150WGH of the waveguide 150WG may be about 3 mm or more. The height 150WGH of the waveguide 150WG may be about 4 mm or more. The height 150WGH of the waveguide 150WG may be about 9 mm or less. The height 150WGH of the waveguide 150WG may be about 8 mm or less. The height 150WGH of the waveguide 150WG may be about 7 mm or less. The height 150WGH of the waveguide 150WG may be about 6 mm or less.

A width 150WGW of the waveguide 150WG in the Y-axis direction may be defined as a width of the ascending part 150E in the Y-axis direction. The width 150WGW of the waveguide 150WG may be in a range of about 100 mm to about 200 mm. The width 150WGW of the waveguide 150WG may be about 110 mm or more. The width 150WGW of the waveguide 150WG may be about 120 mm or more. The width 1 50WGW of the waveguide 150WG may be about 130 mm or more. The width 150WGW of the waveguide 150WG may be about 140 mm or more. The width 150WGW of the waveguide 150WG may be about 190 mm or less. The width 150WGW of the waveguide 150WG may be about 180 mm or less. The width 150WGW of the waveguide 150WG may be about 170 mm or less. The width 150WGW of the waveguide 150WG may be about 160 mm or less.

An inner space of the battery pack 100 is partitioned by the cross-beams 133. In this case, the cross-beams 133 include a metal material such as aluminum and thus hinder radio transmission inside the battery pack 100. According to embodiments, by forming the waveguide 150WG having a locally elevated structure in the lid 150, interference with an environment of an application (e.g., a vehicle body) in which the battery pack 100 is mounted may be prevented, and wireless communication inside the battery pack 100 may be allowed. Accordingly, a wiring for connection between the plurality of battery cell assemblies 120_1, 120_2, 120_3, and 120_4 and the BMS 140 may be omitted, and the energy density (more specifically, energy density per volume) of the battery pack 100 may be improved.

The battery pack 100 may further include exhaust devices. The exhaust devices may be coupled to one of the side walls 110S. The side wall 110S coupled to the exhaust devices may include an exhaust path connected to the exhaust devices. The exhaust devices 130 may be configured to delay thermal propagation by discharging a high-temperature gas from the inside of the battery pack 100 to the outside when at least one of the plurality of battery cell assemblies 120_1, 120_2, 120_3, and 120_4 is in a thermal runaway state.

Here, the thermal runaway state of each of the plurality of battery cell assemblies 120_1, 120_2, 120_3, and 120_4 is a state in which a temperature change of each of the plurality of battery cell assemblies 120_1, 120_2, 120_3, and 120_4 accelerates the temperature change, and is an uncontrollable positive feedback. Temperatures of the plurality of battery cell assemblies 120_1, 120_2, 120_3, and 120_4 that are in the thermal runaway state sharply increase, and a large amount of a high-pressure gas and combustion debris are discharged.

The battery pack 100 may further include additional electronic components. The additional electronic components may be on the pack housing 110. The additional electronic components may be on the electronic component mounting region EMR. The additional electronic components may be interposed between the side walls 110S on which exhaust devices are installed and the plurality of battery cell assemblies 120_1, 120_2, 120_3, and 120_4.

The additional electrical components may further include a cooling device, a power relay assembly (PRA), a safety plug, and the like. The cooling device may include a cooling fan. The cooling fan may circulate air in the battery pack 100 to prevent overheating of each of the plurality of battery cell assemblies 120_1, 120_2, 120_3, and 120_4. The PRA may be configured to supply or cut off power from a high-voltage battery to an external load (e.g., a motor of a vehicle). The PRA may cut off power to an external load (e.g., a motor of a vehicle) to protect the plurality of battery cell assemblies 120_1, 120_2, 120_3, and 120_4 and the external load, when an abnormal voltage such as a voltage surge occurs.

### (Second Embodiment)

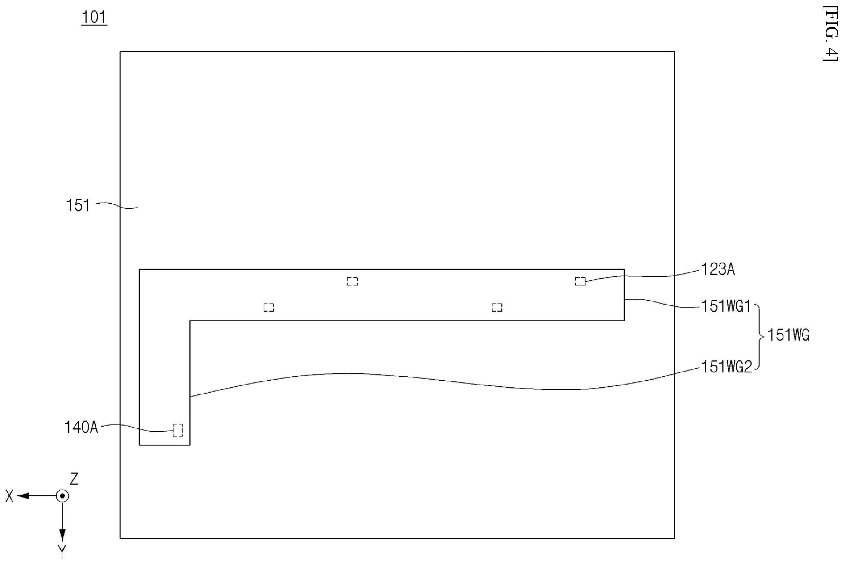

FIG. 4 is a plan view of a battery pack 101 according to embodiments.

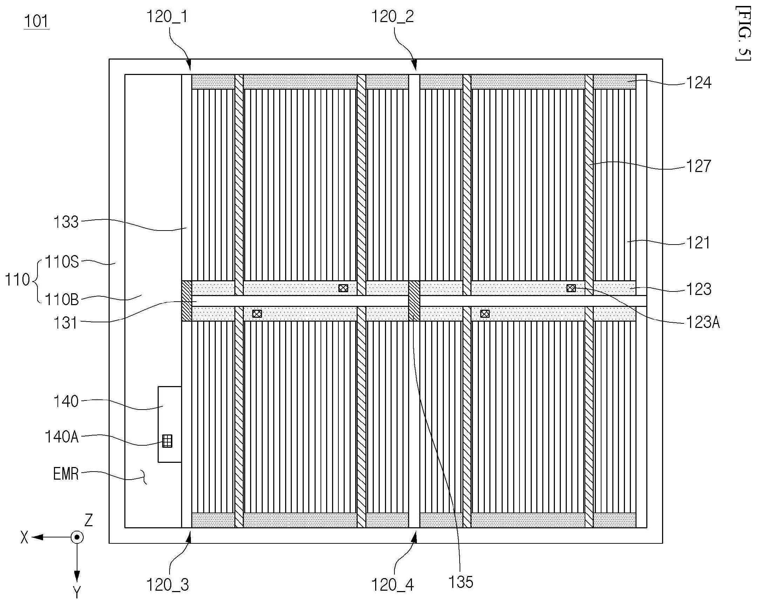

FIG. 5 is a plan view of the battery pack 101 according to embodiments. In FIG. 5, a lid 151 is omitted for more complete understanding of a positional relationship between elements of the battery pack 101.

Referring to FIGS. 4 and 5, the battery pack 101 may include a pack housing 110, a plurality of battery cell assemblies 120_1, 120_2, 120_3 and 120_4, a center beam 131, cross-beams 133, reinforcing parts 135, a BMS 140, and the lid 151. The battery pack 101 is a final form of a battery system to be mounted in a mobility or the like.

The pack housing 110, the plurality of battery cell assemblies 120_1, 120_2, 120_3, and 120_4, the center beam 131, the cross-beams 133, and the reinforcing parts 135 are substantially the same as those described above with reference to FIGS. 1 to 3, and thus, redundant description thereof is omitted here. The BMS 140 is the same as the BMS 140 of FIG. 2 but may be provided at a position spaced apart from the center (e.g., the center in the Y-axis direction) of an electronic component mounting region EMR.

The lid 151 may be coupled to the side walls 110S. The lid 151 may cover elements, such as the battery cell assemblies 120_1, 120_2, 120_3, and 120_4 and electronic components, inside the battery pack 101. The lid 150 may be fixed to the pack housing 110 by a mechanical coupling means such as a bolt.

The lid 151 may include a waveguide 151WG. The waveguide 151WG may include a first part 151WG1 extending in the X-axis direction and a second part 151WG2 extending in the Y-axis direction. The first part 151WG1 may be connected to the second part 151WG2 but embodiments are not limited thereto. The first part 151WG1 and the second part WG2 may be spaced apart from each other.

The waveguide 151WG may overlap a first integrated circuit assembly 123 of each of the plurality of battery cell assemblies 120_1, 120_2, 120_3, and 120_4 and the BMS 140 in the Z-axis direction. The waveguide 151WG may overlap an antenna 123A of the first integrated circuit assembly 123 of each of the plurality of battery cell assemblies 120_1, 120_2, 120_3, and 120_4 and an antenna 140A of the BMS 140 in the Z-axis direction.

The first part 151WG1 of the waveguide 151WG may overlap the first integrated circuit assembly 123 of each of the plurality of battery cell assemblies 120_1, 120_2, 120_3, and 120_4 in the Z-axis direction. The second part 151WG2 of the waveguide 151WG may overlap the BMS 140 in the Z-axis direction. The first part 151WG1 of the waveguide 151WG may overlap the antenna 123A of the first integrated circuit assembly 123 of each of the plurality of battery cell assemblies 120_1, 120_2, 120_3, and 120_4 in the Z-axis direction. The second part 151WG2 of the waveguide 151WG may overlap the antenna 140A of the BMS 140 in the Z-axis direction. The waveguide 151WG may provide a channel for wireless communication between the antenna 123A of the first integrated circuit assembly 123 of each of the plurality of battery cell assemblies 120_1, 120_2, 120_3, and 120_4 and the antenna 140A of the BMS 140.

The first part 151WG1 of the waveguide 151WG may be substantially the same as the waveguide 150WG of FIG. 1. A height of the second part 151WG2 of the waveguide 151WG may be substantially the same as a height of the first part 151WG1 of the waveguide 151WG. A width of the second part 151WG2 of the waveguide 151WG may be substantially the same as a width of the first part 151WG1 of the waveguide 151WG.

### (Third Embodiment)

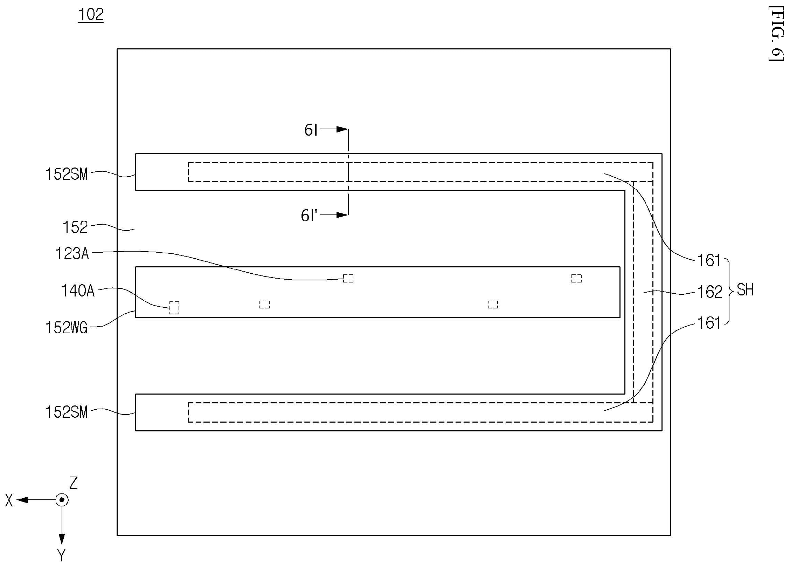

FIG. 6 is a plan view of a battery pack 102 according to embodiments.

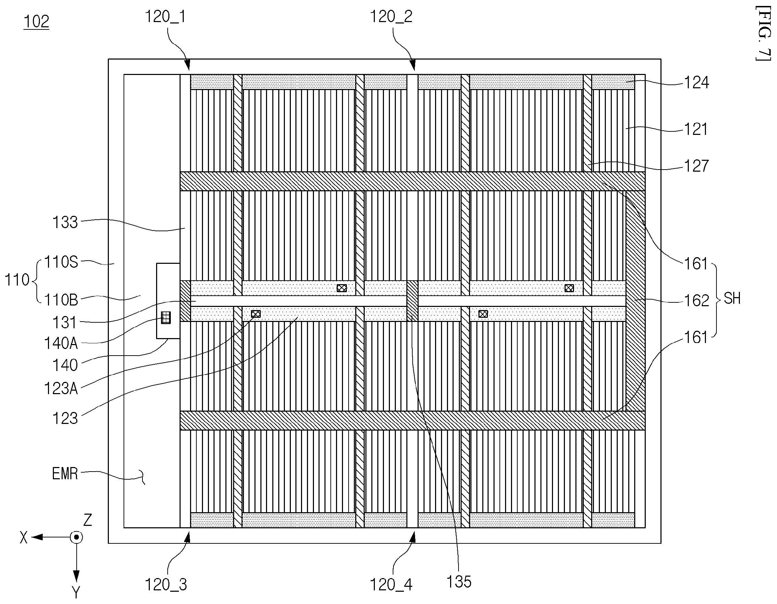

FIG. 7 is a plan view of the battery pack 102 according to embodiments. In FIG. 7, a lid 152 is omitted for more complete understanding of a positional relationship between elements of the battery pack 102.

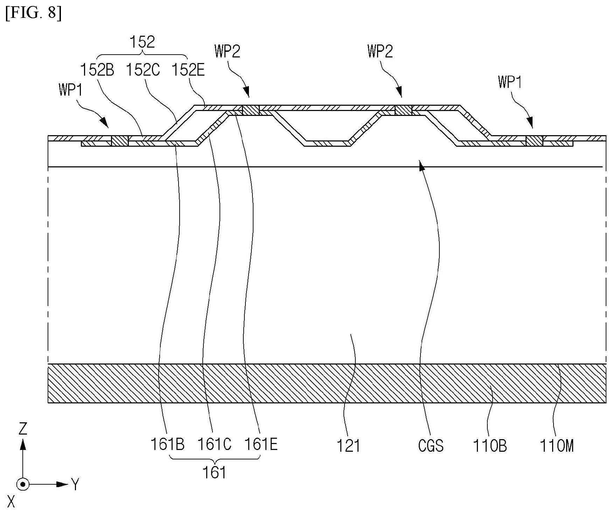

FIG. 8 is a cross-sectional view taken along line 6I-6I' of FIG. 6.

Referring to FIGS. 6 to 8, the battery pack 102 may include a pack housing 110, a plurality of battery cell assemblies 120_1, 120_2, 120_3, and120_4, a center beam 131, cross-beams 133, reinforcing parts 135, a BMS 140, the lid 152, and first and second reinforcing brackets 161 and 162. The battery pack 102 is a final form of a battery system to be mounted in a mobility or the like.

The pack housing 110, the plurality of battery cell assemblies 120_1, 120_2, 120_3, and 120_4, the center beam 131, the cross-beams 133, the reinforcing parts 135, and the BMS 140 are substantially the same as those described above with reference to FIGS. 1 to 3, and thus, redundant description thereof is omitted here.

The first reinforcing brackets 161 may extend in the X-axis direction. The first reinforcing brackets 161 may overlap the plurality of battery cell assemblies 120_1, 120_2, 120_3, and 120_4 in the Z-axis direction. In the present example, each of the first reinforcing brackets 161 may overlap the battery cell assemblies 120_1, 120_2, 120_3, and 120_4, which are arranged in a direction (i.e., the X-axis direction) in which each of the first reinforcing brackets 161 are arranged, in the Z-axis direction. FIG. 7 illustrates that each of the first reinforcing brackets 161 overlaps two of the plurality of battery cell assemblies 120_1, 120_2, 120_3, and 120_4 but is only an example and should not be understood as limiting the technical idea of the present disclosure in any sense. Those of ordinary skill in the art may be able to easily derive an embodiment in which each of the first reinforcing brackets 161 overlaps three or more battery cell assemblies, based on the description herein.

According to embodiments, the first reinforcing brackets 161 may overlap the cross-beams 133 in the Z-axis direction. According to embodiments, the first reinforcing brackets 161 may be coupled to the cross-beams 133. In an example, each of the first reinforcing brackets 161 may be coupled to cross-beams 133 arranged in a direction (i.e., the X-axis direction) in which each of the first reinforcing brackets 161 extends. FIG. 7 illustrates that each of the first reinforcing brackets 161 is coupled to three cross-beams 133 but is only an example and should not be understood as limiting the technical idea of the present disclosure in any sense. Those of ordinary skill in the art may easily derive an embodiment in which each of the first reinforcing brackets 161 is coupled with two or four or more cross-beams, based on the description herein.

The first reinforcing brackets 161 may be coupled to each of the cross-beams 133, which are arranged in the X-axis direction, by fixing parts. The fixing parts may be, for example, mechanical fixing means such as bolts. The fixing parts may fix the lid 150 to the cross-beams 133, in addition to the first reinforcing brackets 161.

Each of the first reinforcing brackets 161 may include a base part 161B, ascending parts 161E, and connection parts 161C. Each of the first reinforcing brackets 161 may include a corrugated structure CGS in the Y-axis direction. The base part 161B, the ascending parts 161E, and the connection parts 161C may be arranged in the Y-axis direction. An arrangement of the base part 161B, the ascending parts 161E, and the connection parts 161C in the Y-axis direction may form the corrugated structure CGS. That each of the first reinforcing brackets 161 includes the corrugated structure CGS in the Y-axis direction may be understood to mean that a position of a part of each of the first reinforcing brackets 161 in the Z-axis direction changes in a corrugated manner according to a position thereof in the Y-axis direction.

The ascending parts 161E may be lifted upward from the base part 161B. A distance of the base plate 110B from each of the ascending parts 161E may be different from a distance of the base plate 110B from the base part 161B. The distance of the base plate 110B from each of the ascending parts 161E may be greater than the distance of a base plate 110B from the base part 161B.

The connection parts 161C may connect the base part 161B to the ascending parts 161E. Each of the base part 161B and the ascending parts 161E may be substantially parallel to a mounting surface 110M of the base plate 110B. Each of the connection parts 161C may include an inclined surface or a curved surface. Each of the connection parts 161C may be inclined with respect to, for example, a mounting surface 110M of the base plate 110B.

The second reinforcing bracket 162 may extend in the Y-axis direction. The first reinforcing brackets 161 may be spaced apart from each other in the Y-axis direction, and the second reinforcing bracket 162 may be interposed between the first reinforcing brackets 161. The second reinforcing bracket 162 may include a corrugated structure in the X-axis direction. The corrugated structure of the second reinforcing bracket 162 is similar to the corrugated structure CGS of the first reinforcing brackets 161.

An arrangement of the first and second reinforcing brackets 161 and 162 may have a roughly C-shape. The first and second reinforcing brackets 161 and 162 may partially surround a waveguide 162WG. The first and second reinforcing brackets 161 and 162 may horizontally and partially surround antennas 123A and an antenna 140A. Each of the antennas 123A may be interposed between the first reinforcing brackets 161. Each of the antennas 123A may overlap the second reinforcing bracket 162 in the X-axis direction.

The waveguide 162WG may be interposed between the first reinforcing brackets 161. The first reinforcing brackets 161 may be spaced apart from each other in the Y-axis direction with the waveguide 152WG interposed therebetween. The second reinforcing bracket 162 may overlap the waveguide 152WG in the X-axis direction.

The first and second reinforcing brackets 161 and 162 may form a shield SH for signals between the antennas 123A and the antenna 140A. The shield SH may prevent or mitigate attenuation of signals transmitted from the antennas 123A to the antenna 140A. In addition, the shield SH may block or mitigate interference of communication between the antennas 123A and 140A due to wireless signals outside the battery pack 100.

The lid 152 may be coupled to side walls 110S. The lid 152 may cover elements, such as the battery cell assemblies 120_1, 120_2, 120_3, and 120_4 and electronic components, inside the battery pack 102. The lid 152 may be fixed to the pack housing 110 by a mechanical coupling means such as a bolt.

The lid 152 may include the waveguide 152WG. The waveguide 152WG is substantially the same as the waveguide 150WG of FIG. 1 and thus redundant description thereof is omitted here. The lid 152 may further include a shield coupling part 152SM. The lid 152 may include an additional ascending part 152E and a connection part 152C for the shield coupling part 152SM. The shield coupling part 152SM may overlap the first and second reinforcing brackets 161 and 162 in the Z-axis direction.

A distance of a base plate 110B from each of the ascending parts 152E may be different from a distance of the base plate 110B from a base part 152B. The distance of the base plate 110B from each of the ascending parts 152E may be greater than the distance of the base plate 110B from the base part 152B. The connection parts 152C may connect the base part 152B and the ascending part 152E.

The base part 161B may overlap the base part 152B in the Z-axis direction. The base part 161B may be in contact with the base part 152B. The base part 161B may be welded to the base part 152B. Accordingly, first welding portions WP1 may be provided on the base part 161B and the base part 152B. The first welding portions WP1 may be formed by, for example, spot welding.

The ascending parts 161E may overlap the ascending part 152E in the Z-axis direction. According to embodiments, ascending parts 161E (e.g., two or more ascending parts 161E) may overlap the ascending part 152E in the Z-axis direction. The ascending parts 161E may be in contact with the ascending part 152E. The ascending parts 161E may be welded to the ascending part 152E. Accordingly, second welding portions WP2 may be provided on the ascending parts 161E and the ascending part 152E. The second welding portions WP2 may be formed by, for example, spot welding.

According to embodiments, the first and second reinforcing brackets 161 and 162 may be coupled not only to the cross-beams 133 but also to the lid 152. The first reinforcing brackets 161 may reinforce the rigidity of the lid 152, and provide structures, which are capable of withstanding uniform surface pressure when the plurality of battery cells 121 swell, on and below the battery cell assembly 120.

### (Fourth Embodiment)

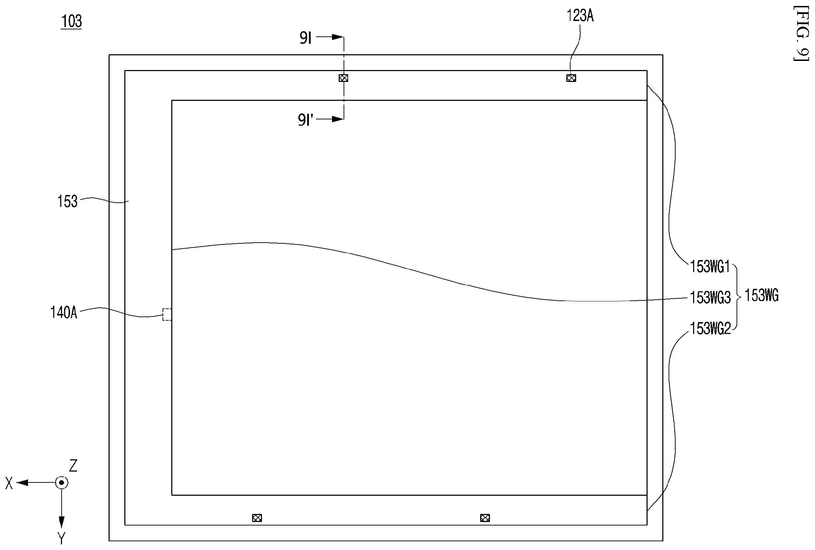

FIG. 9 is a plan view of a battery pack 103 according to embodiments.

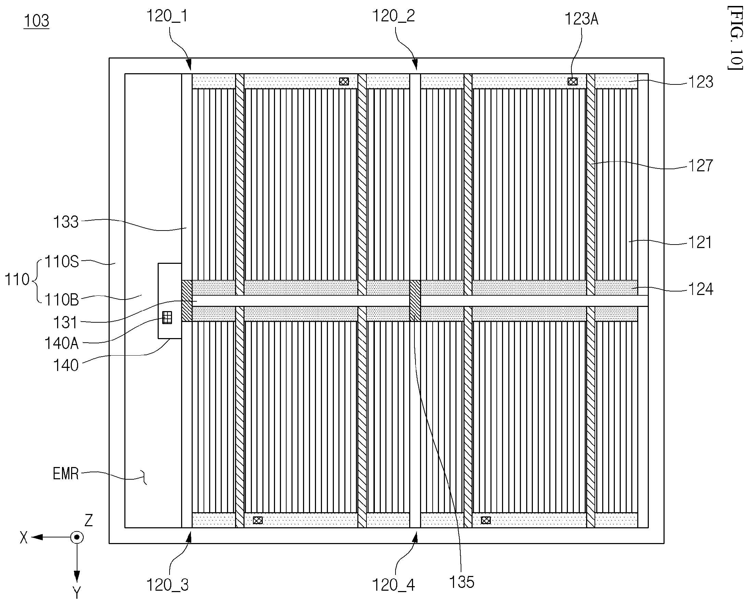

FIG. 10 is a plan view of the battery pack 103 according to embodiments. In FIG. 10, a lid 153 is omitted for more complete understanding of a positional relationship between elements of the battery pack 103.

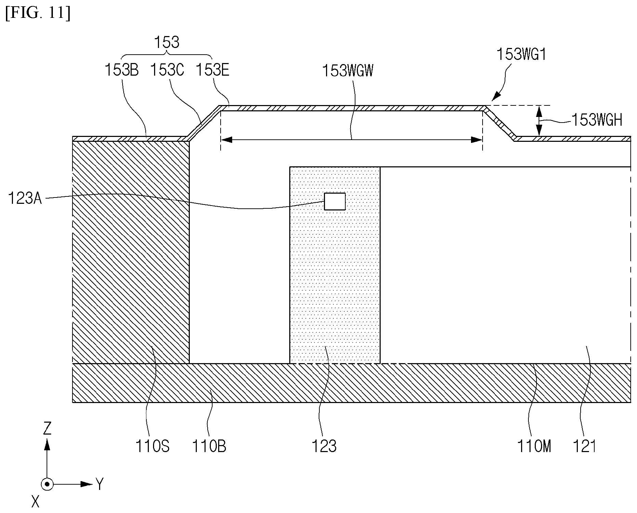

FIG. 11 is a cross-sectional view taken along line 9I-9I' of FIG. 9.

Referring to FIGS. 9 to 11, the battery pack 103 may include a pack housing 110, a plurality of battery cell assemblies 120_1, 120_2, 120_3 and 120_4, a center beam 131, cross-beams 133, reinforcing parts 135, a BMS 140, and the lid 153. The battery pack 103 is a final form of a battery system to be mounted in a mobility or the like.

The pack housing 110, the center beam 131, the cross-beams 133, the reinforcing parts 135, and the BMS 140 are substantially the same as those described above with reference to FIGS. 1 to 3, and thus, redundant description thereof is omitted here.

The plurality of battery cell assemblies 120_1, 120_2, 120_3, and 120_4 are substantially the same as those described above with reference to FIGS. 1 to 3 but may be arranged differently as in FIGS. 1 to 3. A first integrated circuit assembly 123 of each of the plurality of battery assemblies 120_1, 120_2, 120_3, and 120_4 may be on an edge part (e.g., an edge part in the Y-axis direction) of the pack housing 110. The first integrated circuit assembly 123 of each of the plurality of battery assemblies 120_1, 120_2, 120_3, and 120_4 may face a side wall 110S.

According to embodiments, a second integrated circuit assembly 124 of each of the plurality of battery cell assemblies 120_1, 120_2, 120_3, and 120_4 may be on a central part (e.g., a central part in the Y-axis direction) of the pack housing 110. The second integrated circuit assembly 124 of each of the plurality of battery assemblies 120_1, 120_2, 120_3, and 120_4 may face the center beam 131.

The lid 153 may be coupled to side walls 110S. The lid 153 may cover elements, such as the battery cell assemblies 120_1, 120_2, 120_3, and 120_4 and electronic components, inside the battery pack 100. The lid 153 may be fixed to the pack housing 110 by a mechanical coupling means such as a bolt.

The lid 153 may include a waveguide 153WG. A planar shape of the waveguide 153WG may include a C-shape. The waveguide 153WG may include first and second parts 153WG1 and 153WG2 that extend in the X-axis direction and a third part 153WG3 that extends in the Y-axis direction. The third part 153WG3 may be interposed between the first and second parts 153WG1 and 153WG2. The third part 153WG3 may be connected to each of the first and second parts 153WG1 and 153WG2. The third part 153WG3 may be connected to an end of each of the first and second parts 153WG1 and 153WG2 in the X-axis direction.

The first part 153WG1 of the waveguide 153WG may overlap the first integrated circuit assembly 123 of each of the battery cell assemblies 120_1 and 120_2. The second part 153WG2 of the waveguide 153WG may overlap the first integrated circuit assembly 123 of each of the battery cell assemblies 120_3 and 120_4. The third part 153WG3 of the waveguide 153WG may overlap the BMS 140.

The first part 153WG1 of the waveguide 153WG may overlap an antenna 123A of the first integrated circuit assembly 123 of each of the battery cell assemblies 120_1 and 120_2 in the Z-axis direction. The second part 153WG2 of the waveguide 153WG may overlap an antenna 123A of the first integrated circuit assembly 123 of each of the battery cell assemblies 120_3 and 120_4 in the Z-axis direction. The third part 153WG3 of the waveguide 153WG may overlap an antenna 140A of the BMS 140 in the Z-axis direction.

The waveguide 153WG may provide a channel for wireless communication between the antenna 123A of the first integrated circuit assembly 123 of each of the plurality of battery cell assemblies 120_1, 120_2, 120_3, and 120_4 and the antenna 140A of the BMS 140.

The lid 153 may include a base part 153B, an ascending part 153E, and a connection part 153C. A distance between the ascending part 153E and a base plate 110B may be different from a distance between the base part 153B and the base plate 110B. The distance between the ascending part 153E and the base plate 110B may be greater than the distance between the base part 153B and the base plate 110B. The connection part 153C may connect the ascending part 153E and the base part 153B.

As a non-limiting example, the lid 153 may be provided by a casting process. Accordingly, the base part 153B, the ascending part 153E, and the connection part 153C of the lid 153 may be consecutive elements of the lid 153 rather than elements coupled by welding or bolting.

The connection part 153C may be inclined in the Z-axis direction but embodiments are not limited thereto. The connection part 153C may be parallel to the Z-axis direction. The base part 153B and the ascending part 153E may be substantially perpendicular to the Z-axis direction.

A height 153WGH of the waveguide 153WG in the Z-axis direction may be defined as a distance between the base part 153B and the ascending part 153E in the Z-axis direction. The height 153WGH of the waveguide 153WG may be in a range of about 1 mm to about 10 mm. The height 153WGH of the waveguide 153WG may be about 2 mm or more. The height 153WGH of the waveguide 153WG may be about 3 mm or more. The height 153WGH of the waveguide 153WG may be about 4 mm or more. The height 153WGH of the waveguide 153WG may be about 9 mm or less. The height 153WGH of the waveguide 153WG may be about 8 mm or less. The height 153WGH of the waveguide 153WG may be about 7 mm or less. The height 153WGH of the waveguide 153WG may be about 6 mm or less.

A width 153WGW of the waveguide 153WG in the Y-axis direction may be defined as a width of the ascending part 153E in the Y-axis direction. The width 153WGW of the waveguide 153WG may be in a range of about 100 mm to about 200 mm. The width 153WGW of the waveguide 153WG may be about 110 mm or more. The width 153WGW of the waveguide 153WG may be about 120 mm or more. The width 153WGW of the waveguide 153WG may be about 130 mm or more. The width 153WGW of the waveguide 153WG may be about 140 mm or more. The width 153WGW of the waveguide 153WG may be about 190 mm or less. The width 153WGW of the waveguide 153WG may be about 180 mm or less. The width 153WGW of the waveguide 153WG may be about 170 mm or less. The width 153WGW of the waveguide 153WG may be about 160 mm or less.

### (Fifth Embodiment)

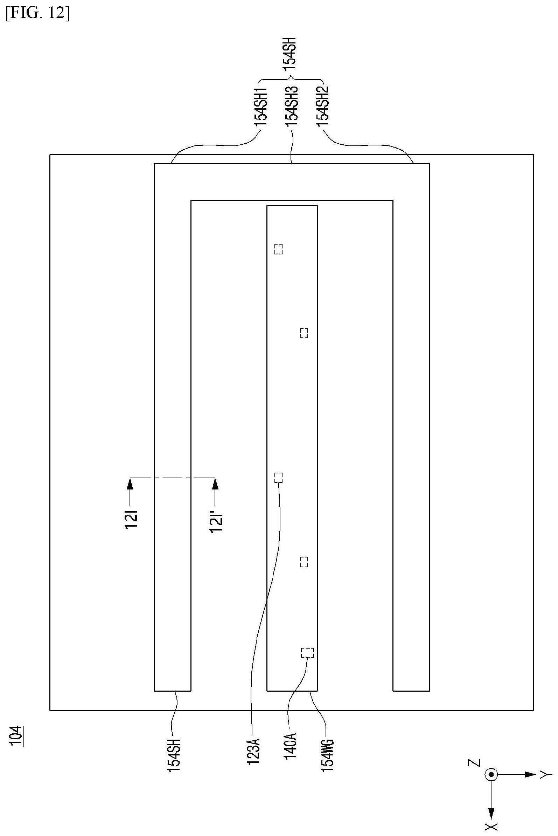

FIG. 12 is a plan view of a battery pack 104 according to embodiments.

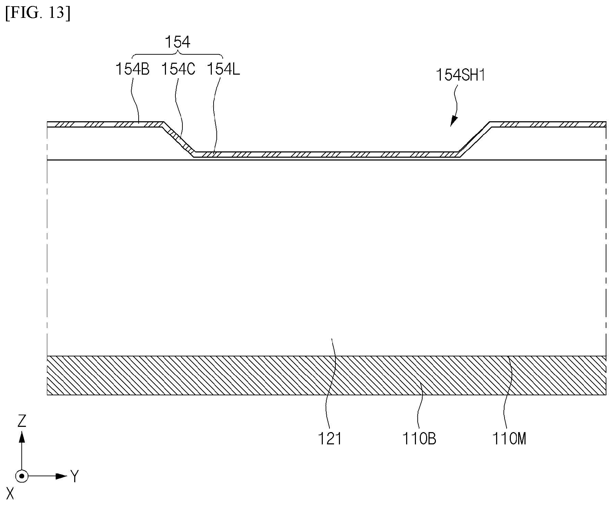

FIG. 13 is a cross-sectional view taken along line 12I-12I' of FIG. 12.

Referring to FIGS. 12 and 13, the battery pack 104 may include a pack housing 110 (see FIG. 2), a plurality of battery cell assemblies 120_1, 120_2, 120_3, and 120_4 (see FIG. 2), a center beam 131 (see FIG. 2), cross-beams 133 (see FIG. 2), reinforcing parts 135 (see FIG. 2), a BMS 140 (see FIG. 2), and a lid 154. The battery pack 104 is a final form of a battery system to be mounted in a mobility or the like.

The pack housing 110 (see FIG. 2), the plurality of battery cell assemblies 120_1, 120_2, 120_3, and 120_4, (see FIG. 2), the center beam 131 (see FIG. 2), the cross-beams 133 (see FIG. 2), the reinforcing parts 135 (see FIG. 2), and the BMS 140 (see FIG. 2) are substantially the same as those described above with reference to FIGS. 1 to 3, and thus, redundant description thereof is omitted here.

The lid 154 may include a waveguide 154WG and a shield 154SH. The waveguide 154WG may be substantially the same as the waveguide 150WG of FIG. 1. The lid 154 may be coupled to side walls 110S. The lid 153 may cover elements, such as the battery cell assemblies 120_1, 120_2, 120_3, and 120_4 (see FIG. 2) and electronic components, inside the battery pack 100. The lid 154 may be fixed to the pack housing 110 (see FIG. 2) by a mechanical coupling means such as a bolt.

A planar shape of the shield 154SH may include a C-shape. The shield 154SH may include first and second parts 154SH1 and 154SH2 that extend in the X-axis direction, and a third part 154SH3 that extends in the Y-axis direction. The third part 154SH3 may be interposed between the first and second parts 154SH1 and 154SH2. The third part 154SH3 may be connected to each of the first and second parts 154SH1 and 154SH2. The third part 154SH3 may be connected to an end of each of the first and second parts 154SH1 and 154SH2 in the X-axis direction.

The shield 154SH may partially surround the waveguide 154WG. The shield 154SH may partially surround antennas 123A and an antenna 140A. The shield 154SH may prevent or mitigate attenuation of signals transmitted from the antennas 123A to the antenna 140A. In addition, the shield 154SH may block or mitigate interference of communication between the antennas 123A and 140A due to wireless signals outside the battery pack 100.

The shield 154SH may include a base part 154B, a descending part 154L, and a connection part 154C. A distance between the descending part 154L and a base plate 110B may be different from a distance between the base part 154B and the base plate 110B. The distance between the descending part 154L and the base plate 110B may be less than the distance between the base part 154B and the base plate 110B. The connection part 154C may connect the descending part 154L and the base part 154B.

According to embodiments, in the descending part 154L, a space between the battery cell assembly 120 and the lid 154 may be reduced or removed and thus the shield 154SH may be configured to block transmission of radio signals.

As a non-limiting example, the lid 154 may be provided by the casting process. Accordingly, the base part 154B, the descending part 154L, and the connection part 154C of the lid 154 may be consecutive elements of the lid 154 rather than elements combined by welding or bolting.

The connection part 154C may be inclined in the Z-axis direction but embodiments are not limited thereto. The connection part 154C may be parallel to the Z-axis direction. The base part 154B and the ascending part 154E may be substantially perpendicular to the Z-axis direction.

The present disclosure has been described above in more detail with reference to the drawings, the embodiments, etc. However, the configurations illustrated in the drawings or embodiments described in the present specification are only embodiments of the present disclosure and do not reflect all the technical ideas of the present disclosure and thus it should be understood that various equivalents and modifications that replace the configurations would have been made at the filing date of the present application.

## Claims

1. A battery pack comprising:
a pack housing including a base plate and side walls;
a plurality of battery cell assemblies provided on the base plate, and each including a plurality of battery cells and an integrated circuit assembly, the integrated circuit assembly being coupled to the plurality of battery cells and including a first antenna;
a battery management system (BMS) including a second antenna; and
a lid coupled to the side walls,
wherein the lid includes a waveguide overlapping the first antenna of each of the plurality of battery cell assemblies and the second antenna,
the lid further includes a base part and an ascending part farther spaced apart from the base plate than the base part, and
the waveguide is on the ascending part.

2. The battery pack of claim 1, wherein the plurality of battery cells of each of the plurality of battery cell assemblies are arranged in a first direction parallel to a mounting surface of the base plate, and
the waveguide extends in the first direction.

3. The battery pack of claim 1, wherein the plurality of battery cells of each of the plurality of battery cell assemblies are arranged in a first direction parallel to a mounting surface of the base plate, and
the waveguide includes a first part extending in the first direction and a second part extending in a second direction perpendicular to the first direction.

4. The battery pack of claim 3, wherein the first part of the waveguide overlaps the first antenna of each of the plurality of battery cell assemblies, and
the second part of the waveguide overlaps the second antenna.

5. The battery pack of claim 1, further comprising:
cross-beams between the plurality of battery cell assemblies; and
a reinforcing part coupled to the cross-beams,
wherein the reinforcing part is spaced apart from the base plate with the cross-beams interposed between the reinforcing part and the base plate, and
the waveguide overlaps the reinforcing part.

6. The battery pack of claim 1, further comprising first reinforcing brackets coupled to the lid and spaced apart from each other with the waveguide interposed between the first reinforcing brackets.

7. The battery pack of claim 6, further comprising a second reinforcing bracket between the first reinforcing brackets.

8. The battery pack of claim 7, wherein the plurality of battery cells of each of the plurality of battery cell assemblies are arranged in a first direction parallel to a mounting surface of the base plate, and
each of the first reinforcing brackets extends in the first direction.

9. The battery pack claim 8, wherein the second reinforcing bracket extends in a second direction perpendicular to the first direction.

10. The battery pack of claim 9, wherein the reinforcing bracket overlaps the waveguide in the first direction.

11. The battery pack of claim 1, wherein a height of the waveguide is in a range of 1 mm to 10 mm.

12. The battery pack of claim 1, wherein a width of the waveguide is in a range of 100 mm to 200 mm.

13. The battery pack of claim 1, wherein the lid further includes a shield partially surrounding the waveguide, and
the lid further includes a descending part closer to the base plate than the base part,
wherein the shield is on the descending part.

14. The battery pack of claim 13, wherein a planar shape of the shield includes a C-shape.

15. A battery pack comprising:
a pack housing including a base plate and side walls;
first to fourth battery cell assemblies provided on the base plate, and each including a plurality of battery cells and an integrated circuit assembly, the integrated circuit assembly being coupled to the plurality of battery cells and including a first antenna;
a battery management system (BMS) including a second antenna; and
a lid coupled to the side walls,
wherein the lid includes a waveguide including first to third parts, wherein the first part overlaps the first antenna of each of the first and second battery cell assemblies, the second part overlaps the first antenna of each of the third and fourth battery cell assemblies, and the third part overlaps the second antenna,
the lid further includes a base part and an ascending part farther spaced apart from the base plate than the base part, and
the waveguide is on the ascending part.

16. The battery pack of claim 15, wherein a planar shape of the waveguide includes a C-shape.

17. The battery pack of claim 15, wherein each of the first and second parts extends in a first direction parallel to a mounting surface of the base plate, and
the third part extends in a second direction parallel to the mounting surface and perpendicular to the first direction.

18. The battery pack of claim 15, wherein the third part is interposed between the first and second parts.
